# FASCICULE DE BREVET EUROPEEN

(11) **EP 0 647 798 B1**
(45) Date de publication et mention de la délivrance du brevet: **28.01.1998**
(21) Numéro de dépôt: 94402242.5
(22) Date de dépôt: 06.10.1994
(51) Int. Cl.: F16H 7/14

(54) **Dispositif pour le réglage de la tension d'une courroie d'entraînement**
Treibriemenspannvorrichtung
Drive belt tensioning device

(30) Priorité: 12.10.1993 FR 9312108
(43) Date de publication de la demande: 12.04.1995
(73) Titulaire: RENAULT, 92109 Boulogne-Billancourt (FR)
(72) Inventeur: Debrut, Jean-Pierre, F-92000 Nanterre (FR); Van Brabant, Jean-Claude, F-95870 Bezons (FR)

(56) Documents cités:
- FR-A- 2 685 422
- US-A- 3 922 927
- US-A- 4 512 752
- US-A- 4 583 961

## Description

La présente invention concerne un dispositif pour le réglage de la position d'un organe qui est monté articulé en un point sur une structure et dont un autre point est relié à ladite structure par des moyens de serrage aptes à immobiliser en position cet organe.

La présente invention a plus particulièrement pour objet un dispositif pour le réglage de la tension d'une courroie d'entraînement d'un organe auxiliaire d'un moteur à combustion interne de véhicule automobile, telle que par exemple la courroie d'entraînement de l'alternateur.

Le réglage de la tension d'une courroie d'entraînement d'un accessoire de moteur de véhicule automobile est particulièrement important pour permettre à ladite courroie d'assurer correctement sa fonction d'entraînement en rotation.

A cet effet, il est connu pour un alternateur, de monter ce dernier articulé en un point de la structure d'un moteur à combustion interne et de le relier à cette même structure par un second point, de positionnement variable, permettant de faire varier la contrainte de tension exercée sur la courroie par la poulie de l'alternateur, l'immobilisation en position de l'alternateur étant assuré par des moyens de serrage.

Un des dispositifs couramment utilisés pour modifier la position de l'alternateur est constitué pour l'essentiel d'un pignon ou d'une roue dentée qui coopère en translation avec une crémaillère rapportée dont une extrémité est montée articulée sur la structure, le pignon pouvant être manoeuvré au moyen d'une clé dynamométrique ou par l'intermédiaire d'un système à vis écrou.

Un exemple de ce type de dispositif est décrit et représenté dans le document FR-A-2685422.

Dans le document FR-A-2685422, la liaison à pignon et crémaillère comporte un pignon étagé comportant un étage denté et un étage cylindrique de guidage et comporte également une plaque rapportée fixée à la structure dans laquelle est formée une lumière longitudinale traversée par l'axe de rotation du pignon. Cette plaque comporte une crémaillère parallèle à la lumière qui coopère avec l'étage denté du pignon et une surface de guidage et de réaction qui coopère avec l'étage de guidage du pignon.

Le dispositif de réglage selon le document FR-A-2685422 est plus particulièrement caractérisé en ce que la crémaillère est réalisée directement dans la matière de la plaque par découpe, cette dernière présentant alors en section transversale une épaisseur sensiblement constante.

Cette conception des dispositifs pour le réglage de la tension d'une courroie d'entraînement présente l'inconvénient de nécessiter l'utilisation d'un certain nombre de pièces rapportées, telle que notamment la plaque porte crémaillère ou encore le pignon, qui compliquent le montage de l'accessoire sur la structure du moteur et augmente l'encombrement et le poids de l'ensemble.

Le but de l'invention est donc de proposer un dispositif de réglage de la tension d'une courroie d'entraînement à la fois fiable et précis, mais également particulièrement simple et économique puisque ne nécessitant aucune pièce rapportée superflue.

Le dispositif selon l'invention, pour le réglage de la position d'un organe tel qu'un alternateur qui est monté articulé en un point sur la structure d'un moteur à combustion interne et dont un autre point est relié à la même structure par des moyens de serrage aptes à immobiliser en position cet organe sur la structure du moteur.

Selon l'invention, le dispositif de réglage est caractérisé en ce que cet organe comporte des évidements permettant la mise en place de moyens de poussée aptes à coopérer avec les moyens de serrage pour permettre le déplacement dudit organe autour de son axe de rotation jusqu'à venir occuper une position prédéterminée.

Conformément à une autre caractéristique du dispositif de réglage selon l'invention, les moyens de serrage comprennent une tige filetée solidaire de la structure, cette tige étant logée dans une lumière formant glissière portée par l'organe à positionner, l'axe de la tige filetée étant sensiblement parallèle à l'axe de rotation de cet organe.

Conformément à une autre caractéristique du dispositif de réglage selon l'invention, les moyens de poussée sont formés par une vis et un écrou.

Conformément à une autre caractéristique du dispositif de réglage selon l'invention, les évidements comprennent une gorge rectiligne destinée à loger la vis de poussée, cette gorge s'étendant perpendiculairement à la tige filetée et sensiblement dans l'axe de la lumière de sorte que la vis de poussée puisse venir en appui contre la tige filetée, la gorge présente un évidement polygonal destiné à loger partiellement l'écrou coopérant avec ladite vis.

On comprendra mieux les buts, aspects et avantages de la présente invention, d'après la description présentée ci-après d'un mode de réalisation de l'invention, donné à titre d'exemple non limitatif, en se référant au dessin annexé, dans lequel :

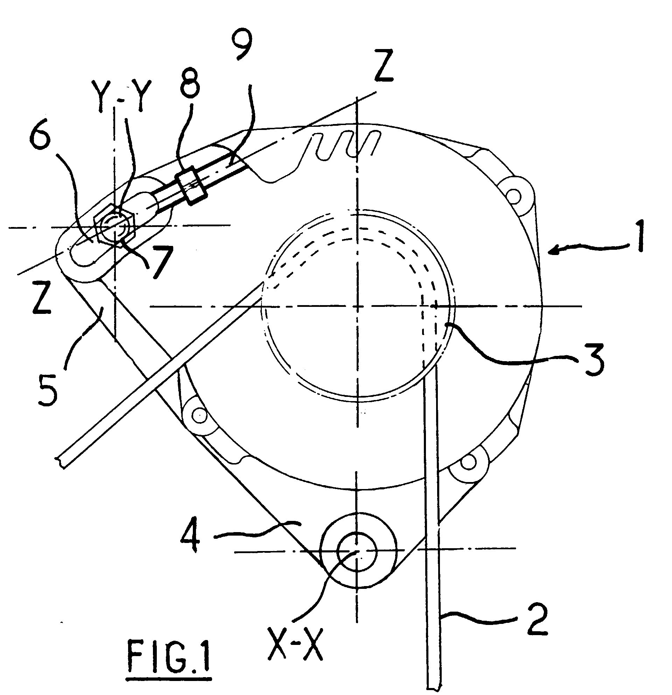

la figure 1 est une vue partielle en élévation d'un dispositif de réglage conforme à l'invention appliqué au réglage de la tension d'une courroie d'entraînement d'un alternateur de véhicule automobile.

Conformément à la figure 1, l'alternateur 1 qui équipe un moteur à combustion interne d'un véhicule automobile, est entraîné en rotation par une courroie d'entraînement 2 qui coopère avec une poulie d'entraînement 3 de l'alternateur 1.

Le réglage de la tension de la courroie 2 est assuré en réglant la position de l'alternateur 1 par rapport à une structure fixe non figurée constitué par exemple par le carter cylindres du moteur.

A cet effet, le corps de l'alternateur 1 comporte une patte de montage qui est articulée à l'une de ses extrémités 4 autour d'un pivot d'axe X-X porté par ladite structure.

L'extrémité opposée 5 de la patte de montage est également reliée à la structure fixe du moteur par des moyens de serrage aptes à immobiliser en position cet organe par rapport à la structure.

Pour ce faire, l'extrémité 5 de la patte de montage présente une lumière 6 en arc de cercle ou oreille, faisant office de glissière dans laquelle est logée une tige filetée 7 d'axe Y-Y parallèle à l'axe X-X, ladite tige filetée 7 étant solidaire de la structure du moteur. Cette tige filetée 7 coopère avec un écrou et une entretoise non figurée pour assurer le blocage en position du dispositif de réglage selon l'invention.

Dans le prolongement de la lumière 6, la patte de montage de l'alternateur 1 comporte une gorge rectiligne sensiblement semi-cylindrique 9 d'axe Z-Z destinée à loger une vis. Cette gorge 9 s'étend perpendiculairement à l'axe Y-Y et sensiblement dans l'axe de la lumière 6, de sorte que la vis puisse venir en appui contre ladite tige filetée 7 quelle que soit la position de cette dernière dans la lumière 6. La gorge 9 présente par ailleurs un évidement central polygonal 8 destiné à loger partiellement un écrou correspondant.

Le dispositif de réglage qui vient d'être décrit s'utilise de la manière suivante.

Lorsque l'on souhaite modifier la valeur de la tension de la courroie 2, il suffit d'introduire un écrou correspondant dans l'évidement 8 et de disposer dans la gorge 9 une vis, puis de visser cette dernière à travers ledit écrou jusqu'à venir en appui contre la tige filetée 7. Après avoir desserré la liaison filetée 7, il suffit alors d'exercer une poussée adéquate sur la tige filetée fixe 7 par l'intermédiaire de la vis logée dans la gorge 9 et manoeuvrée par exemple avec une clé dynamométrique, pour entraîner par réaction un déplacement correspondant du corps mobile de l'alternateur 1 autour de l'axe X-X dans la direction souhaitée et pour assurer ainsi la tension de la courroie 2 à la valeur de réglage prédéterminée.

La tension prédéterminée de serrage ayant été atteinte, il suffit alors de resserrer la liaison filetée 7 pour immobiliser l'alternateur 1 sur la structure du moteur dans la nouvelle position réglée. Il ne reste plus alors qu'à retirer la vis et l'écrou logés dans la gorge 9 et l'évidement 8.

Ainsi conformément à l'invention, il est possible d'opérer un réglage extrêmement précis de la tension de la courroie d'entraînement, tout en utilisant un dispositif de mise en oeuvre extrêmement simple. Aucune pièce rapportée n'est montée à demeure sur le véhicule.

Bien entendu, l'invention n'est nullement limitée au mode de réalisation décrit et illustré qui n'a été donné qu'à titre d'exemple.

Ainsi il est possible de remplacer la gorge 9 et l'évidement 8 par un alésage fileté usiné à travers la patte de montage de l'alternateur correspondant dans lequel peut venir se visser une tige de réglage correspondante. Cette variante de réalisation supprime le recours à un écrou rapporté. La vis de réglage peut alors être laissée à demeure ou bien n'être montée que lors des opérations de réglage de la tension.

## Revendications

1. Dispositif pour le réglage de la position d'un organe (1), tel qu'un alternateur, qui est monté articulé en un point (X-X) sur la structure d'un moteur à combustion interne et dont un autre point (6) est relié à ladite structure par des moyens de serrage (7) aptes à immobiliser en position ledit organe (1), caractérisé en ce que ledit organe comporte des évidements (8,9) permettant la mise en place de moyens de poussée aptes à coopérer avec lesdits moyens de serrage (6,7) pour permettre le déplacement dudit organe (1) autour de son axe de rotation (X-X) jusqu'à venir occuper une position prédéterminée.

2. Dispositif pour le réglage de la position d'un organe selon la revendication 1, caractérisé en ce que lesdits moyens de serrage comprennent une tige filetée (7) solidaire de ladite structure coopérant avec une lumière (6) formant glissière portée par ledit organe (1), l'axe (Y-Y) de ladite tige filetée (7) étant sensiblement parallèle à l'axe de rotation de cet organe (1).

3. Dispositif pour le réglage de la position d'un organe selon la revendication 2, caractérisé en ce que lesdits moyens de poussée sont formés par une vis et un écrou.

4. Dispositif pour le réglage de la position d'un organe selon la revendication 3, caractérisé en ce que lesdits évidements comprennent une gorge rectiligne (9) destinée à loger ladite vis, ladite gorge (9) s'étendant perpendiculairement à ladite tige filetée (7) et sensiblement dans l'axe de ladite lumière (6) de sorte que la vis puisse venir en appui contre ladite tige filetée (7), ladite gorge (9) présentant un évidement polygonal (8) destiné à loger partiellement ledit écrou.

## Patentansprüche

1. Vorrichtung zur Einstellung der Lage eines Organs (1) wie einer Drehstromlichtmaschine, das an einem Punkt (X-X) auf der Struktur eines Verbrennungsmotors angelenkt ist und von dem ein weiterer Punkt (6) mit dieser Struktur durch Klemm-Mittel (7) verbunden ist, die das Organ (1) in seiner Lage festhalten können, dadurch gekennzeichnet, daß das Organ Aussparungen (8, 9) aufweist, welche die Anordnung von Schubmitteln gestatten, die mit den Klemm-Mitteln (6, 7) zusammenwirken können, um die Verschiebung des Organs (1) um seine Drehachse (X-X) bis zur Einnahme einer vorbestimmten Position zu ermöglichen.

2. Vorrichtung zur Eistellung der Lage eines Organs nach Anspruch 1, dadurch gekennzeichnet, daß die Klemm-Mittel eine mit der Struktur einstückige Schraubenspindel (7) umfassen, die mit einem Schlitzloch (6) zusammenwirkt, das eine von dem Organ (1) getragene Gleitführung bildet, wobei die Achse (Y-Y) der Schraubenspindel (7) im wesentlichen parallel zur Drehachse dieses Organs (1) ist.

3. Vorrichtung zur Eistellung der Lage eines Organs nach Anspruch 2, dadurch gekennzeichnet, daß die Schubmittel von einer Schraube und einer Mutter gebildet werden.

4. Vorrichtung zur Eistellung der Lage eines Organs nach Anspruch 3, dadurch gekennzeichnet, daß die Aussparungen eine geradlinige Rille (9) umfassen, die zur Aufnahme der Schraube bestimmt ist, wobei sich die Rille (9) senkrecht zur Schraubenspindel (7) und im wesentlichen in der Achse des Schlitzloches (6) erstreckt, so daß die Schraube an der Schraubenspindel (7) zur Anlage kommen kann, wobei die Rille (9) eine mehreckige Aussparung (8) aufweist, die zur teilweisen Aufnahme der Mutter bestimmt ist.

## Claims

1. A device for setting the position of a member (1), such as an alternator, one point (X-X) of which is articulated on the structure of an internal combustion engine and another point (6) of which is connected to this structure by clamp means (7) adapted to lock this member (1) in position, characterised in that this member comprises recesses (8, 9) enabling the positioning of thrust means adapted to cooperate with the clamp means (6, 7) in order to enable the member (1) to be displaced about its axis of rotation (X-X) until it occupies a predetermined position.

2. A device for setting the position of a member as claimed in claim 1, characterised in that the clamp means comprise a threaded rod (7) rigid with the structure cooperating with a port (6) forming a slideway borne by this member (1), the axis (Y-Y) of the threaded rod (7) being substantially parallel to the axis of rotation of the member (1).

3. A device for setting the position of a member as claimed in claim 2, characterised in that the thrust means are formed by a screw and a nut.

4. A device for setting the position of a member as claimed in claim 3, characterised in that the recesses comprise a rectilinear groove (9) adapted to house the screw, this groove (9) extending perpendicular to the threaded rod (7) and substantially in the axis of the port (6) such that the screw can come to bear on the threaded rod (7), the groove (9) having a polygonal recess (8) adapted partially to house the screw.
